# EUROPEAN PATENT APPLICATION

(11) **EP 1 686 104 A1**
(43) Date of publication of application: **02.08.2006**
(21) Application number: 06290185.5
(22) Date of filing: 31.01.2006
(51) Int. Cl.: C04B 33/04, B28C 1/08

(54) **A method for processing fine kaolin**

(30) Priority: 31.01.2005 BR 0500403
(71) Applicant: Companhia Vale Do Rio Doce, 33030-970 Santa Luzia, Minas Gerais (BR)
(72) Inventor: Rueda Criscuolo, Paulo Sergio, Belo Horizonte - Minas Gerais 31270-720 (BR)
(74) Representative: Hirsch & Associés

(57) **Abstract**

A method for processing fine kaolin which is comprised of the steps of dispersing (Dp) kaolin by adding the chemical dispersion agent in the optimum amount required, so that the pulp reaches a minimum viscosity and a maximum dispersion of particles, and submitting same to a deaeration step (Ds), and the latter is followed by the stages of conditioning (Co), centrifugation (Ce1, Ce2), magnetic separation (Sp), chemical bleaching (Br), said method also being comprised of the steps of:
(a) introducing chemical dispersion agents in said aqueous kaolin suspension after the deaeration step (Ds), so that the titanium impurities can aggregate into one another;
(b) adjusting the pH of the aqueous kaolin solution by adding a suitable amount of basic reagents;
(c) submitting the pulp to a vigorous agitation, so that the kaolin is fully dispersed and also the titanium particles collide against one another to form micro-aggregates.

## Description

The present invention is directed to a method for processing kaolin clays by removing titanium and other impurities, more specifically a method for processing fine kaolin which is carried out by means of the selective aggregation where the solids dispersed in solution are conditioned with dispersion agents and conditioning agents of low molecular weight followed subsequently by a high speed centrifugation.

The kaolin clay or hydrated aluminum silicate is a ore that when submitted to a purification and improvement process, exhibits a white color and relatively fine granulometry.

These properties make it possible to widely use kaolin as a pigment in several materials, such as rubber and resins, and in some coatings for inks and papers.

The kaolin used as a coating pigment in the cellulose industry requires a high whiteness and suitable color and adhesion. To satisfy such requirements, it is critical that the impurities are removed.

This should be so because the titanium oxides (TiO₂) and iron, impurities that are present in the natural form of kaolin, have a direct influence on the yellowing (yellowness) or whiteness so that when in high concentrations they become the main reasons for the kaolin pigment to be rejected in commercial applications.

Currently, the process sequence adopted for the purification/improvement of kaolin is determined in accordance with the physical/chemical properties of clays since these can vary in accordance with the amount of particle distribution, the size of their particles, as well as the amount of impurities.

In a general way, in the state of the art a number of techniques for purifying kaolin clay are known. Amongst these, the most common comprise: chemical bleaching, magnetic separation, leaching, flotation and selective flocculation.

The chemical bleaching, in view of being one of the first techniques developed, besides improving the whiteness of kaolin, is seen today as a step that complements the process for improving kaolin due to its low efficiency in removing non-ferrous impurities, mainly titanium.

The high energy magnetic separation involves the use of a magnetic field to remove the impurities having magnetic susceptibility such as titanium, rutile, hematite, mica and pyrite. However, this technique is not fully efficient for the removal of microparticles of impurities such as titanium. This is because the titanium contaminant occurs in practically all the granulometries of kaolin, from 2 *µ*m to 0.2 *µ*m, what makes its difficult to remove same reach. Thus, analogous to the bleaching, the magnetic separation also is used as a technique that complements process for improving kaolin.

On its turn, the leaching of kaolin takes place by using reagents such as, for example, zinc or sodium hydrosulfite. However, this leaching method is limited because it removes only the iron and so other leaching reagents and/or processes are economically impracticable for the removal of titanium impurities.

The state of the art has also taught the selective classification of kaolin for the sedimentation or centrifugation in different ranges of sizes to produce a coating pigment having higher brightness and adhesion. However, such techniques applied separately, by not removing titanium particles, cannot improve the whiteness efficiency of paper or reduce the production costs.

Contrary to the bleaching and magnetic separation and leaching techniques, the flotation and selective flocculation processes, by being more recent, have shown to be techniques more suited for the purification of kaolin what have led to the development of research in order to improve the efficiency of such processes dedicated to the production of highly pure kaolin.

In the flotation process, the impurity is selectively removed by hydrophobic particles that adhere to air bubbles, and the latter are then separated from the kaolin in a flotation column. The flotation process for removing the impurities from kaolin is described in more detail in the following patents US 3,450,257; US 3,979,282; US 4,472,271; US 4,492,628; US 4,629,556; and US5,522,986.

In a productive and qualitative way, the selective flocculation technique has shown better results in the improvement of kaolin compared to the flotation process.

As is known by those skilled in the art, there are two variants for the improvement of clays by using the selective flocculation:
- Flocculate the kaolin clay and leave its impurities in suspension; or
- Flocculate the impurities and leave the clay in suspension.

Between these two possibilities, it is known that the first method is not fully suited to carry out the improvement. One of the main reasons is connected to the high consumption of reagents necessary to carry out the flocculation, which reagents are calculated in accordance with the amount of clay particles present in the pulp and also due to the contamination of the resultant clay by the presence of the flocculation reagent. Examples of this variant of the process are described in patents US 3,477,809; US 3,808,021; and US 3,837,482.

The second method is a solution more suited to carry out the improvement of kaolin clays since the impurities, by being in the solution in a lower concentration than the kaolin particles and by being of a lesser dimension, require the use of a lower number of reagents for the flocculation. Therefore, the contamination of the clay product will be lower. Examples of this method are given in patents US 3,371,988; US 3,701,417; US 3,862,027 and US 3,857,781.

In such processes, the activation and flocculation of impurities (titanium and other metals) are carried out by using polyvalent cations and flocculating polymers, as described in patents US 3,371,988; US 3,701,417; and US 3,862,027.

However, the main problem associated with the use of flocculating polymers is related to the fact that they have high molecular weight and also comprise, in addition to the impurities, a part of the kaolin particles of the clay. This limitation of reagents results in particles of clays being stuck to the impurities, the result of which is the reduction of the percent recovery of purified clay.

It should be stressed that another limiting factor is related to the difficulty in determining the amount of reagents required for purifying a certain clay sample without reducing the recovery of the clay. Thus, the balance between the recovery of the clay and its purity is a never-ending problem.

In order to overcome the problems due to the use of multipurpose reagents, monovalent conditioning agents are used, such as ammonium salts, as described in the process of patent US 4,604,369. In accordance with its understanding, this process flocculates selectively the impurities, thus leaving the clay in suspension by using monovalent cations and flocculating polymers, however without an excess of dispersing agent.

Thus, the advance made possible by such research and experiments led to the development of new techniques/processes that produced better results with respect to the increased whiteness of kaolin.

Thus, one of the objects of the present invention is to provide an improvement method that can produce kaolin with a high whiteness (above 89.0).

Another object of the present invention is to provide an improvement method that can recover between 50 and 60% kaolin.

Another object of the present invention is to provide an improvement method that in addition to improve the whiteness of kaolin clay with a minimum amount of chemical reagents, can produce a product containing a minimum amount of undesirable residues, mainly titanium.

Another object of the present invention is to provide a method for improving kaolin that, by being simpler, attains a bigger productivity and a lower cost with the application of selective aggregation.

The selective aggregation is a process to be used instead of the selective flocculation for eliminating or reducing the TiO₂ content of kaolin. The object of this technique is to aggregate or coagulate titanium to an extent where it is sufficiently coarse to be removed later, for example, through centrifugation. Flocculating polymers are not used in the selective aggregation, what increases the final recovery of the process.

In order to make it easier to understand the present invention, reference is made to the general process for improving kaolin wherein new parameters of the procedural steps of this method will be discussed.

Samples of crude kaolin clay ore removed from the mines are generally milled and dispersed in large size mixers, thus forming pulps (approximately 60% ore and 40% water). Such dispersion is obtained by the combined action of a vigorous mechanical agitation of the mixer, chemical dispersing agents, the latter including polyacrylates, polyphosphates, carbonates, silicates, and mixtures thereof (basic salts in general) and water, and under certain conditions related to pH, density and viscosity.

Following the process given, for example, in patent US 3,371,988 and considering same as a reference, the chemical dispersing agent is added in addition to the amount required in the dispersion (optimum point), so that the pulp can reach a state of maximum stability of the dispersion containing kaolin particles.

According to the state of the art, this kaolin clay pulp is sent to the improvement plant where a deaeration step takes place, in order that all the thick particles of the pulp, generally those having a diameter of more than 44 micrometers, are substantially removed. At this stage, the pulp passes through sorting devices, such as sandboxes or cyclones, where the thicker particles (rutile, pyrite, silica and coarse kaolin) are not accepted in the application of pigment, after being removed, and then are finally discarded.

After that, in the kaolin improvement step, the pulp containing approximately 40% solids is subject to a number of new steps in order to remove the impurities contained therein and attain the maximum whiteness with the lower size possible. These steps are referred to the selective aggregation, centrifugation, magnetic separation, chemical bleaching, filtering, evaporation and drying, respectively.

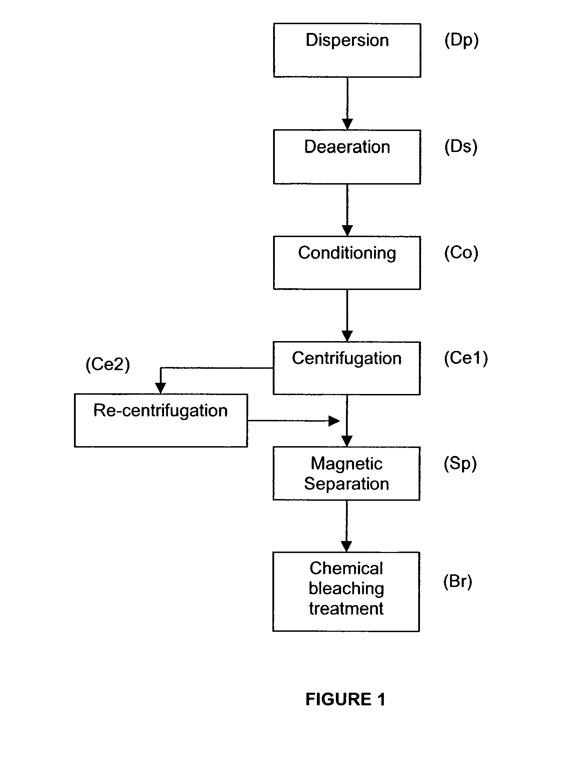

This procedure sequence that will define the proposed method is substantially represented in the block diagram as shown in figure 1.

As can be seen, the selective aggregation takes place specifically in the conditioning step (Co), where the kaolin clay pulp, after being subject to the dispersion (Dp) and deaeration (Ds) steps, is conditional in special equipment or mixers and is again provided with a new addition of chemical dispersing agents so that it can form layers between the particles dispersed in the pulp and the impurities in order to promote the subsequent separation process later on. Such chemical agents, in general, are present at an excess of 50% in relation to the amount spent in kaolin dispersion 1.

The chemical agents added to this aqueous dispersion comprise more advantageously mixtures of polyacrylate basic salts, silicates, although other dispersants separately can also be employed. The preferred mixture is that of sodium polyacrylate and sodium silicate, since it showed to be more efficient in the dispersion of fine particle of hard kaolin, and also in view of the lower cost related to sodium silicate. Typically, the suitable amount of sodium polyacrylate and sodium silicate to be added to the dispersion amounts to a value of 25% for each chemical compound. However, sodium polyacrylate at a 50% ratio in the pulp can also be used.

In this process, the stability of the dispersion and the subsequent separation of impurities can be attained by adding a pH modifying agent. Such pH modifying agent is an element that has a basic pH (above 7.0) that is able to keep the pH of the pulp dispersion between 7.5 and 12, and more preferably between 8 and 10. Such pH modifying agents generally include, without being limited thereto, watersoluble agents such sodium or potassium hydroxide.

Thus, in this conditioning step (Co), the pulp is kept for 30 minutes under vigorous agitation, specifically at a minimum peripheral speed of 10 m/s, so that the kaolin is fully dispersed and also so that the titanium particles collide with one another and form micro-aggregates.

The kaolin solids dispersed in the suspension are then subject to the centrifugation step by means of a sequence of two centrifugations (Ce1, Ce2) preferable at a high speed of approximately 4,000 rpm. In this step, the titanium micro-aggregate formed during the conditioning step, is separated and discarded together with the coarse kaolin material.

However, in some cases, when kaolin of high whiteness is used, it is possible to initially apply a low speed centrifugation (Ce1) at 2,000 rpm, followed by a recentrifugation (Ce2) necessarily at a high speed, or even only one high speed centrifugation.

It should be stressed that, when two centrifugations (Ce1, Ce2) are used instead of only one, the recovery of kaolin tends in fact to diminish, but the whiteness increases. The fraction of kaolin recovered from the centrifugation that follows is directed to the magnetic separation step (Sp) to remove substantially the portion containing iron impurities.

Finally, after carrying out the magnetic separation (Sp), the kaolin is directed to a chemical bleaching treatment (Br) carried out by using sodium dithionite (hydrosulfite), employing a 3 kg/ton rate.

As noted previously, in view of the fact that the physical and chemical properties of the kaolin samples are different from one another, the conditions of this process can be changed in order to obtain products with a varied particle size distribution.

Thus, the flexibility of this method improvement method can used advantageously to provide different products for applications in which different particle size distribution are specified by the customer. The data related to the particle size distribution are given in some of the following examples.

The present invention will be illustrated by a number of examples that show the one skilled in the art application of the present invention in the improvement of hard kaolin extracted from mines in Rio Capim basin, in the state of Pará, Brazil.

### Example 1

From hard kaolin samples showing both high whiteness and low whiteness, obtained in the mines in Rio Capim basin, the kaolin dispersion subject to the deaeration step (Ds) was directed to a conditioning step (Co) wherein it have undergone a selective aggregation, and the pulp was centrifuged later at a high speed only once and finally subject to the magnetic separation (Sp) and chemical bleaching (Br) through the application of 3 kg/ton of sodium dithionite, where a recovery between 60 and 70% of kaolin and a whiteness between 88.5 and 89.5 were attained.

### Ore

Primary centrifugation recovery(%)

Recentrifugation recovery (%)

Total recovery (%)

Whiteness

| | | | |
|---|---|---|---|
| High whiteness | 63.7 | - 63.7 | 89.51 |
| Low whiteness | 66.7 | - 66.7 | 88.73 |

### Example 2

The kaolin pulp is conditioned analogously to an operational sequence given in example 1.

However, in this case a second centrifugation (Ce2) is applied in order to optimize the selection of fine kaolin particles, especially the samples of hard kaolin having a low whiteness that can reach a maximum whiteness of approximately 88.5 in a single centrifugation for recoveries of about 60%.

Thus, to attain a whiteness above 89.0 with a recovery of about 60%, the ore having a low whiteness is subject to two centrifugations (Ce1, Ce2) at a high speed of about 4,000 rpm, so that in the first centrifugation (Ce1) the recovery is kept around 67% and in the second centrifugation (Ce2) it is kept around 90%. Thus, the overall recovery of fines having a whiteness above 89.0 will be about 60%.

### Ore

Primary centrifugation recovery(%)

Recentrifugation recovery(%)

Total Recovery (%)

Whiteness

| | | | | |
|---|---|---|---|---|
| Low whiteness | 66.2 | 91.8 | 60.7 | 89.21 |

### Example 3

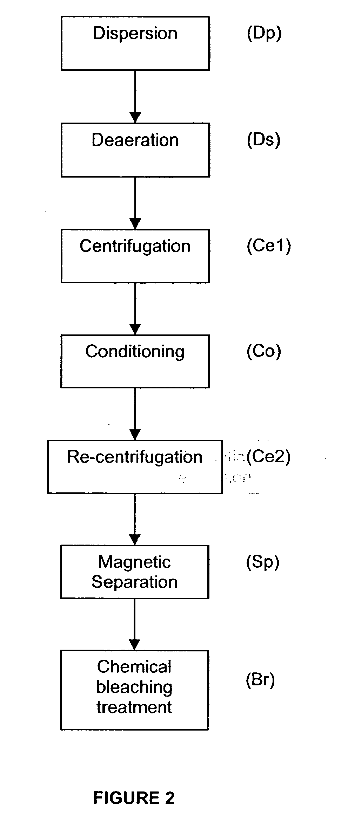

Also, it was seen that the selective aggregation, in the previous example, could have been carried out right after the first centrifugation (Ce1), see figure 2, without hampering the whiteness and other optical properties, thus decreasing its operational cost and attaining an overall recovery of about 60%, as is shown in the table below:

### Ore

Primary centrifugation recovery(%)

Recentrifugation recovery (%)

Total Recovery (%)

Whiteness

| | | | | |
|---|---|---|---|---|
| Low whiteness | 66.5 | 92.3 | 61.4 | 89.3 |

### Example 4

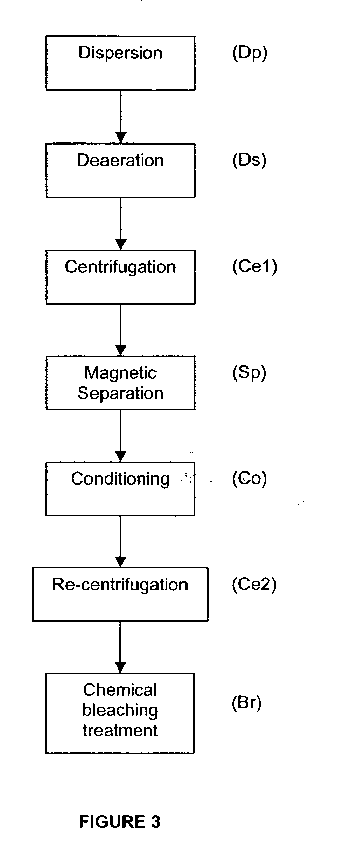

A similar alternative with the procedure route cited in Examples 2 and 3 is to carry out the first centrifugation (Ce1) at a low speed (2000 rpm) at a recovery of approximately 80%, carry out the magnetic separation (Sp) and then carry out the centrifugation (Ce2) of the fines at high speed (4,000 rpm) again at a 80% recovery, thus attaining an overall recovery of fines of about 65%. In this case, the selective aggregation can be carried out after the magnetic separation (Sp) and immediately before the second centrifugation (Ce2), in order to decrease still more the operational costs as shown in figure 3. This route will more probably succeed when it is used in kaolin having a high initial whiteness. The kaolin having a low initial whiteness cannot reach whiteness above 89.0 by this route.

### Ore

Primary centrifugation recovery(%)

Recentrifugation recovery (%)

Total Recovery (%)

Whiteness

| | | | | |
|---|---|---|---|---|
| High whiteness | 82.6 | 78.8 | 65.1 | 89.75 |
| Low whiteness | 79.9 | 79.6 | 63.6 | 88.13 |

## Claims

1. A method for processing fine kaolin, which method is comprised of the steps of dispersing (Dp) kaolin by adding the chemical dispersing agent in the optimum amount required, so that the pulp can reach a minimum viscosity and a maximum dispersion of particles, and submitting same to a deaeration step (Ds), the latter being followed by the conditioning (Co), centrifugation (Ce1, Ce2), magnetic separation (Sp), and chemical bleaching (Br) steps, said method being **characterized by** comprising the steps of:
(a) introducing chemical dispersing agents into said aqueous kaolin suspension after the deaeration step (Ds), so that an aggregation of the titanium impurities can take place;
(b) adjusting the pH of the aqueous kaolin solution by adding the suitable amount of basic reagents;
(c) submitting the pulp to a vigorous agitation in mixers so that the kaolin is fully dispersed and also the titanium particles collide against one another to form micro-aggregates.

2. The method for processing fine kaolin according to claim 1, **characterized in that** said pulp is subject to at least one centrifugation step (Ce1).

3. The method for processing fine kaolin according to claim 1 or 2, **characterized in that** said pulp is subject to two centrifugation steps (Ce1, Ce2).

4. The method for processing fine kaolin according to claim 1, **characterized in that** the magnetic separation step (Sp) is carried out after at least a first centrifugation (Ce1) of kaolin is carried out.

5. The method for processing fine kaolin according to claim 1 or 3 or 4, **characterized in that** the magnetic separation step (Sp) is carried out after the first and/or second centrifugation (Ce1, Ce2) of kaolin.

6. The method for processing fine kaolin according to claim 1 or 3 or 4 or 5, **characterized in that** the second centrifugation (Ce2) is carried out after the conditioning step (Co).

7. The method for processing fine kaolin according to claim 1 or 3 or 4 or 5 or 6, **characterized in that** the second centrifugation (Ce2) must be carried through at high speed.

8. The method for processing fine kaolin according to claim 1 or 2 or 3 or 7, **characterized in that** the speed of the centrifugal machines during the centrifugation steps (Ce1, Ce2) is not lower than 2,000 rpm.

9. The method for processing fine kaolin according to claim 1 or 2 or 3 or 7 or 8, **characterized in that** the high speed of the centrifugation during the centrifugation steps (Ce1, Ce2) is approximately 4,000 rpm.

10. The method for processing fine kaolin according to claim 1, **characterized in that** the solid contents of the pulp in the conditioning step (Co) is approximately 40%.

11. The method for processing fine kaolin according to claim 1, **characterized in that** the pulp in the conditioning step (Co) is subject to an agitation per approximately 30 minutes.

12. The method for processing fine kaolin according to claim 1, **characterized in that** the peripheral speed of the mixer in the conditioning step(Co) is approximately 10 m/s.

13. The method for processing fine kaolin according to claim 1, **characterized in that** the chemical dispersing agent is present in an amount at least 50% higher than the amount spent in the kaolin dispersion step (Dp).

14. The method for processing fine kaolin according to claim 1 or 13, **characterized in that** the dispersing agent is at least a low molecular weight compound, or mixtures thereof.

15. The method for processing fine kaolin according to claim 1 or 13 or 14, **characterized in that** the dispersing agent is sodium polyacrylate and sodium silicate, or a mixture thereof.

16. The method for processing fine kaolin according to claim 1 or 13 or 14 or 15, **characterized in that** the chemical dispersing agent is present in an amount at least 50% higher than the amount spent in the dispersion (1) of kaolin, of which 25% is sodium polyacrylate and 25% is sodium silicate.

17. The method for processing fine kaolin according to claim 1, **characterized in that** the pH is adjusted between 7,5 and 12, preferable between 8 and 10, by using a basic reagent.

18. The method for processing fine kaolin according to claim 1 or 17, **characterized in that** the pH is 10.

19. The method for processing fine kaolin according to claim 1 or 17 or 18, **characterized in that** sodium or potassium hydroxide is used to adjust the pH.

20. The method for processing fine kaolin according to claim 1 or 2 or 3, **characterized in that** the centrifugation steps (Ce1, Ce2) are carried out in separate centrifugal machines.

21. The method for processing fine kaolin according to claim 1 or 2 or 3, **characterized in that** the centrifugal machines are of the vertical type and/or decanter.

22. The method for processing fine kaolin according to claim 1, **characterized in that** the kaolin is treated in the chemical bleaching step (Br) by using sodium dithionite (hydrosulfite) following a 3 kg/ton ratio.

23. The method for processing fine kaolin according to claim 1, **characterized in that** the selective aggregation is carried out after the first centrifugation (Ce1).

24. The method for processing fine kaolin according to claim 1 or 23, **characterized in that** the selective aggregation is carried out after the magnetic separation (Sp) and before the second centrifugation (Ce2).
